# EUROPÄISCHE PATENTSCHRIFT

(11) **EP 4 426 956 B1**
(45) Veröffentlichungstag und Bekanntmachung des Hinweises auf die Patenterteilung: **23.09.2026**
(21) Anmeldenummer: 22817074.2
(22) Anmeldetag: 27.10.2022
(51) Int. Cl.: F16D 1/08, B23B 31/14

(54) **BAUTEIL ZUR AUFNAHME UND ZUM SPANNEN EINES ROTORS**
COMPONENT FOR RECEIVING AND CLAMPING A ROTOR
COMPOSANT DE RÉCEPTION ET DE SERRAGE D'UN ROTOR

(30) Priorität: 01.11.2021 DE 102021128423
(43) Veröffentlichungstag der Anmeldung: 11.09.2024
(73) Patentinhaber: Schenck RoTec GmbH, 64293 Darmstadt (DE)
(72) Erfinder: BINSACK, Volker, 64331 Weiterstadt (DE)
(74) Vertreter: Haarpatent Patentanwälte Krämer Meyer
(86) Internationale Anmeldenummer: PCT/DE2022/100797
(87) Internationale Veröffentlichungsnummer: WO 2023/072345

(56) Entgegenhaltungen:
- EP-A1- 2 939 772
- AT-U2- 11 067
- DE-A1- 102016 108 748
- DE-B3- 102020 113 330
- JP-A- H05 329 761

## Beschreibung

Die Erfindung betrifft ein Bauteil zur Aufnahme und zum Spannen eines Rotors mit einer Ringanordnung aus mehreren Ringen, in der Spannelemente zur Aufnahme des Rotors und Gewichte zur Fliehkraftkompensation vorliegen.

Um Belastungen zu messen, die auf einen rotierenden Körper wirken, werden Schleuderprüfstände herangezogen, in denen der Körper, wie beispielsweise ein Rotor in seinem Betriebsdrehzahlbereich und auch darüber betrieben wird. Auch in der Serienproduktion ist das Schleudern von Rotoren teilweise notwendig, um ein Setzverhalten zu durchlaufen, sodass ein Auswuchten ohne nachfolgende Unwuchtänderung während dem Betrieb möglich ist. Zusätzlich kann der Rotor beispielsweise zyklischen Drehzahländerungen oder Temperaturschwankungen ausgesetzt werden. Der Rotor kann hierbei über seinen Wellenzapfen an einer dünnen, elastischen Welle hängend befestigt und beschleunigt werden. Die Rotoren müssen für diesen Zweck lösbar an der Schleuderwelle befestigbar sein.

Bekannte Rotorspannaufnahmen weisen Fliehkraftsegmente auf, um Einflüsse der Fliehkraft auf die Rotorspannung zu kompensieren.

Aus DE 15 52 197 C ist ein Zentrifugalfutter für hochtourig umlaufende Werkzeuge mit einer Mehrzahl von zu einem Futterbackensatz sich ergänzenden Futterbacken bekannt. Das Zentrifugalfutter weist mit den Futterbacken ausgebildete Fliehgewichte auf, die als zweiarmiger Hebel um einen Hebeldrehpunkt schwenkbar sind. Die Fliehgewichte sind zwischen zwei axial im Abstand voneinander angeordneten Futterbackensätzen angeordnet und jeweils mit einer Futterbacke der beiden Futterbackensätze einstückig ausgebildet. Hierbei springen die Futterbackensätze zur Bildung der Hebeldrehpunkte zwischen ihren Enden radial nach außen vor.

US 2 830 822 A offenbart ein Zentrifugalspannfutter, bei dem mehrere Gewichte um einen Rotor angeordnet sind und sich bei Drehung des Rotors so infolge der Zentrifugalkraft radial nach außen bewegen. Die Gewichte sind weiterhin mit einem Ring verbunden, der in Verbindung mit Klauen steht, die radial beweglich auf dem Rotor angeordnet sind. Durch die infolge der Zentrifugalkraft radial nach außen gerichteten Bewegung der Gewichte werden die Teile des Ringes, die mit den Gewichten verbunden sind, ebenfalls nach außen gedrückt, so dass die mit den dazwischenliegenden Teilen des Ringes verbundenen Klauen zusammengezogen werden.

Aus der DE 42 20 136 C1 ist ein Spannsystem für Werkzeugmaschinen zum Einspannen von rotationsorientierten Werkzeugen und/oder Werkstücken mit einem Futter- oder Grundkörper, einem Spanngetriebe, Grundbacken und Aufsatzbacken bekannt. Die Aufsatzbacken bestehen hierbei zumindest teilweise aus Faserverbundkunststoffen, wobei der Futterkörper, das Spanngetriebe, die Grundbacken und die Schnittstelle zwischen den Grundbacken und den Aufsatzbacken aus einem metallischen Werkstoff gefertigt sind. An der Bandage aus Faserverbundkunststoffen zwischen den Spannelementen sind Fliehkraft-Ausgleichsgewichte so angeordnet sind, dass sie zusammen mit der Bandage aus Faserverbundkunststoffen in radialer Richtung beweglich und in tangentialer Richtung festgelegt sind. Bei zunehmender Drehzahl und damit nach außen zunehmender Fliehkraft wird die Bandage aus Faserverbundkunststoff nach außen bewegt.

Ferner beschreibt DE 198 34 739 C1 eine Spanneinrichtung, bei der ein polygonförmig gestalteter Grundkörper elastisch in eine runde Form gebracht wird. Hierbei werden zwischen den Kraftangriffspunkten gelegene Bereiche des Grundkörpers derart verformt, dass sich die Aufnahme weitet und ein runder Schaft montierbar ist. Sobald die auf den Grundkörper wirkenden Radialkräfte verringert oder sogar aufgehoben werden, kehrt der Grundkörper aufgrund seiner elastischen Eigenschaften in seine polygone Ausgangsform zurück und der Schaft ist in der Aufnahme fixiert. EP 1 669 621 B1 nimmt diese Lehre auf und fügt in Hohlräume, die im Grundkörper vorliegen, Fliehkraftausgleichsgewichte ein, so dass die Fliehkraftausgleichsgewichte aufgrund auftretender Zentrifugalkräfte nach außen gedrückt werden. Hierdurch werden die dazwischenliegenden Bereiche nach innen gebogen und die Spannkraft auf den Schaft wird erhöht.

DE 907 233 B beschreibt eine durchmesserveränderliche, rohrförmige Werkstückaufnahme für Werkzeugmaschinen, die den Durchmesser des aufzunehmenden Teiles überragende, sich nur über Teile ihres Umfangs erstreckende Spannflächen aufweist, die unter elastischer Verformung der zwischen ihnen liegenden Bereiche der Aufnahme auf den Werkstückdurchmesser einstellbar sind.

DE 10 2020 113 330 B3 offenbart ein Bauteil zur Verbindung einer Welle mit einer einen Rotor aufnehmbaren Spannaufnahme, wobei die Spannaufnahme in ein topfförmiges Gehäuse einbringbar und dort mittels Befestigungsmittel fixierbar ist. An dem Gehäuseboden des Gehäuses liegen Anschlussmitteln zur drehfesten Anbindung des Gehäuses an die Welle vor. Die Befestigungsmittel weisen zumindest eine Aussparung in der Grundfläche auf, so dass sie mit ihrer Grundfläche nur bereichsweise auf der Außenmantelfläche aufliegen.

Problematisch bei den bekannten Spannvorrichtungen ist, dass sich aufgrund hoher Drehzahlen hohe Fliehkräfte bilden, die zur Reduzierung der Spannkräfte führen. Außerdem sind die Spannvorrichtungen aufwendig in der Fertigung und der Wartung. Ein Entspannen der Vorrichtungen ist zudem umständlich. Ein wesentlicher Nachteil ist, dass die Spannvorrichtungen nicht anpassbar sind, d. h. aufgrund deren Konstruktion und Zusammensetzung erreichen sie entsprechend definierte Spannkräfte.

Der Erfindung liegt die Aufgabe zugrunde, eine Vorrichtung zum Spannen eines Rotors bereitzustellen, bei der die Spannung des Rotors nicht durch starke Fliehkräfte beeinträchtigt wird und die einfach anpassbar ist.

Gelöst wird die Aufgabe durch die Merkmale des Anspruchs 1. Bevorzugte Ausgestaltungen sind in den abhängigen Ansprüchen beschrieben.

Die Aufgabe wird erfindungsgemäß dadurch gelöst, dass ein Bauteil zur Aufnahme und zum Spannen eines Rotors bereitgestellt wird, mit einer einen Hohlraum umschließenden Ringanordnung, umfassend mehrere ineinanderliegende Ringe und mit sich radial durch die Ringanordnung erstreckenden Verbindungsmitteln, durch die die Ringe drehfest miteinander verbunden sind, wobei an der Ringanordnung zumindest zwei in den Hohlraum ragende Spannelemente angebracht sind, die mit Spannflächen eine Aufnahme für den Rotor formen und wobei an der Ringanordnung Gewichte zur Fliehkraftkompensation vorliegen. Die Ringe der Ringanordnung verhalten sich im Grunde wie Blattfedern, die bei Zugbelastung näherungsweise starr sind. Hierdurch werden die Spannelemente nach innen gezogen, wenn sich die als Fliehkraftsegmente fungierenden Gewichte nach außen bewegen. Somit wird die Spannkraft auch nicht durch hohe Fliehkräfte nachteilig beeinflusst. Wesentlicher Vorteil des Bauteils ist, dass es aufgrund seines Aufbaus einfach an verschiedenartige Spannaufgaben angepasst werden kann, indem beispielsweise die Anzahl der Ringe verändert und hierdurch die Nachgiebigkeit bzw. Elastizität der Ringanordnung geändert wird. Hierdurch lassen sich Lösungen für unterschiedliche Spannkräfte und Betriebsdrehzahlen anpassen. Insbesondere hohe Drehzahlen lassen sich realisieren.

Zum Einspannen eines Rotors kann von außen Druck auf das Bauteil, insbesondere die Gewichte aufgebaut werden, so dass sich die Fliehkraftsegmente nach innen und die Spannelemente nach außen bewegen. Ein einfaches und schnelles Entspannen ist hierdurch möglich.

Das Bauteil kann Bestandteil einer voll automatisierten Ankoppelvorrichtung sein, bei der der einzuspannende Rotor automatisch gespannt und wieder gelöst wird. Das Bauteil kann ferner dazu verwendet werden, einen Rotor in einem Schleuderprüfstand zu spannen.

Es kann in einer Ausgestaltung vorgesehen sein, dass die Spannelemente Y-förmig gestaltet sind und mit ihren beiden Schenkeln Spannflächen für den aufzunehmenden Rotor formen. Die Spannelemente weisen somit einen einfachen Aufbau auf, der günstig herstellbar ist. Die Spannelemente können einteilig oder mehrteilig gestaltet sein und Hohlräume zur Gewichtseinsparung aufweisen. Der einteilige Aufbau hat Vorteile bei der Fertigung, wogegen eine mehrteilige Konstruktion der Spannelemente Vorteile bei der Montage bzw. Wartung besitzt.

Es kann auch möglich sein, rotorspezifische Spannstücke zu erstellen. Hierdurch lassen sich nicht runde Geometrien spannen. Beispielsweise kann mit einem ausgeformten Spannstück ein Getriebeprofil gespannt werden. Dies kann den Anwendungsbereich und das übertragbare Drehmoment erhöhen.

Es kann weiterhin vorgesehen sein, dass die Spannelemente an den Verbindungsmitteln, insbesondere an den durch die Verbindungsmittel gebildeten Verbindungsstellen angebracht sind. Die Verbindungsmittel können beispielsweise als Schraube/Mutter-Verbindung, Nieten oder Bolzen ausgebildet sein und die Ringanordnung radial durchziehen. Die Verbindungsmittel dienen im Sinne der Erfindung dazu, die Ringe drehfest miteinander zu verbinden. Die Verbindungsmittel können auch als stoffschlüssige Verbindungen vorliegen, die sich radial durch die Ringe erstrecken und diese drehfest verbinden.

Die Spannelemente können über entsprechende Befestigungsmittel an Aufnahmen der Verbindungsmittel oder an der Verbindungsstelle befestigbar sein. Es kann beispielsweise eine Schraubverbindung, Nut-Feder-Verbindung, Schwalbenschwanzverbindung, sonstige Steckverbindung oder Kombination hiervon zwischen Verbindungsmittel, insbesondere der Verbindungsstelle und Spannelement vorgesehen sein, so dass die Spannelemente reversibel an der Ringanordnung befestigbar sind, jedoch hohe Drehzahlen aushalten. Hierdurch wird die Wartung des Bauteils vereinfacht. Denn das Spannelement kann in einfacher Weise bei Bedarf ausgetauscht werden.

Der Rotor kann von zwei diametral in der Ringanordnung angeordneten Spannelementen gespannt werden. Hierdurch können Rotoren einfacher gespannt werden, die von einer zylindrischen Ausgestaltung abweichen. Es kann jedoch auch vorgesehen sein, dass in der Ringanordnung drei gleichmäßig zueinander beabstandete Spannelemente vorliegen. Diese Ausgestaltung ist insbesondere bei der Spannung von schweren Rotoren vorteilhaft.

Um eine möglichst optimale Übertragung des Drehmoments auf den Rotor, bzw. dessen Wellenzapfen zu erreichen, ist vorgesehen, dass die Schenkel der Spannelemente eine konkav geformte Spannfläche bilden, die sich möglichst um eine große Fläche eines Wellenzapfens eines Rotors legt.

In eine Ausgestaltung ist vorgesehen, dass die Spannflächen mit einer die Reibung zwischen Spannflächen und Rotoroberfläche erhöhenden Schicht beschichtet sind. Hierdurch wird die Übertragung des Drehmoments verbessert. Ferner kann vorgesehen sein, dass die Schicht einfach abtragbar und so an den Durchmesser des aufzunehmenden Rotors anpassbar ist. Die Schicht kann bei Bedarf bereichsweise vor dem Einspannen des Rotors abgetragen werden.

Damit die Verbindungsmittel in einfacher Weise durch die Ringe durchführbar sind, können die Ringe koaxial zueinander liegende Bohrungen zum Durchführen der radial verlaufenden Verbindungsmittel aufweisen. Die Bohrungen können einen in die nachfolgende Bohrung eingreifenden Kragen aufweisen, so dass die Ringe bereits ohne Verbindungsmittel miteinander verbindbar sind. Außerdem können in den Bohrungen Innengewinde vorliegen, die mit entsprechenden Außengewinden der Verbindungsmittel interagieren. Die Verbindungsmittel können auch als stoffschlüssige Verbindungen vorliegen, die sich radial durch die Ringe erstrecken. Bei dieser Ausgestaltung kann auf die Bohrungen verzichtet werden.

Die Gewichte zur Fliehkraftkompensation liegen an der Ringanordnung, insbesondere deren Außenumfang vor. In einer Ausgestaltung ist vorgesehen, die Gewichte an weiteren, nicht mit Spannelementen verbundenen Verbindungsmitteln, bzw. denen durch die Verbindungsmittel gebildeten Verbindungsstellen anzubringen, so dass die Gewichte vorteilhafterweise an einem Ende der Verbindungsmittel, bzw. Verbindungsstelle nahe dem oder am äußeren Umfang der Ringanordnung vorliegen. Die Gewichte können hierfür beispielsweise eine Senkbohrung aufweisen, durch die die Verbindungsmittel geführt werden, bevor sie in die Ringe eingreifen.

Zwischen den Ringen können Abstandsmittel vorliegen. In einer Ausgestaltung weisen die Abstandsmittel Bohrungen auf und sind derart ausgerichtet, dass deren Bohrung konzentrisch zu denen der Ringe liegen. Durch die Abstandsmittel bleibt der Abstand zwischen den Ringen konstant und die Ringe werden durch die Verbindungsmittel bzw. deren auf die Ringe wirkende Kraft nicht beschädigt. Die Abstandsmittel können in Gestalt von Metallplättchen zwischen zwei Ringen, vorteilhaftweise mehrere über den Umfang verteilt, angeordnet sein. Hierbei kann die Passung dadurch verbessert werden, dass die Abstandsmittel eine konkave und eine gegenüberliegende konvexe Seite aufweisen.

Für hohe Genauigkeitsanforderungen ist es möglich, den kompletten Aufbau in einer Vorrichtung in Spannposition vorzupositionieren und die komplette Einheit auf eine passende Spannfläche einzuschleifen. Hierdurch wird eine genaue Führung des Spannmittels in Betriebsposition ermöglicht. Das Verfahren ermöglicht es, etwaige Fertigungsungenauigkeiten in den einzelnen Komponenten auszugleichen.

Die Erfindung wird nachfolgend anhand eines Ausführungsbeispiels der Erfindung näher erläutert, das in der Zeichnung dargestellt ist. Es zeigen
- Figur 1: eine Schnittansicht einer Ausgestaltung des Bauteils mit aufgenommenen Rotor und
- Figur 2: einen Querschnitt durch das Bauteil gemäß Figur 1.

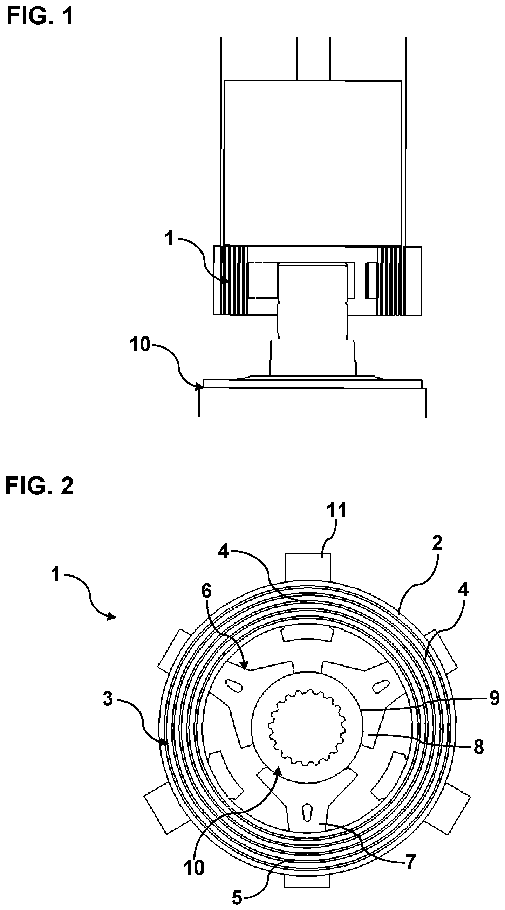

Figur 1 zeigt eine Schnittansicht einer Ausgestaltung des Bauteils mit aufgenommenen Rotor und Figur 2 einen Querschnitt durch das Bauteil gemäß Figur 1. Das Bauteil 1 weist mehrere unterschiedliche Durchmesser aufweisende Ringe 2 auf, die ineinanderliegend angeordnet sind und so eine Ringanordnung 3 bilden. Die Ringe 2 können beispielsweise aus Metall oder einem Kunststoff, insbesondere einem faserverstärkten Kunststoff bestehen und als Hohlzylinder ausgebildet sein. Die Dicke der Ringe 2 kann bei allen Ringen 2 gleich sein. Die Anzahl der Ringe 2 kann je nach Spannaufgabe variieren.

Die Ringe 2 können koaxial zueinander angeordnete, nicht dargestellte Bohrungen aufweisen, die radial verlaufende Durchgänge formen, in die Verbindungsmittel 4 einführbar bzw. durchführbar sind. Zwischen den Ringen 2 können um die, die Durchgänge formenden Bohrungen herum, Abstandsmittel 5 angeordnet sein, die zur Durchführung der Verbindungsmittel 4 ebenfalls eine Bohrung aufweisen können. Die Bohrung der Abstandsmittel 5 kann ein Innengewinde besitzen, um die Verbindung der Ringe 2 stabiler zu gestalten. Die Dicke der Abstandsmittel 5 kann je nach Bedarf an die gewünschte Dicke der Ringanordnung 3 angepasst werden. Auch kann es vorteilhaft sein, dass die Abstandsmittel 5 jeweils eine konvexe und eine konkave Seitenfläche aufweisen. Als Material der Abstandsmittel 5 kann beispielsweise Metall, Kunststoff oder eine Kombination hieraus verwendet werden.

Die Verbindungsmittel 4 können als Schraube/Mutter-Verbindung, Niet oder Bolzen ausgestaltet sein, die durch die Durchgänge geführt werden und die Ringe 2 miteinander drehfest verbinden. Die Verbindungsmittel 4 können auch als stoffschlüssige Verbindung ausgestaltet sein, so dass Verbindungen durch z.B. Kleben, Löten oder Schweißen möglich sind.

An zumindest zwei Verbindungsmitteln 4 sind Y-förmig gestaltete Spannelemente 6 angeordnet, die eine Basis 7 und zwei Schenkel 8 aufweisen. Die Basis 7 kann beispielsweise über eine Schraubverbindung mit den Verbindungsmitteln 4 oder der Ringanordnung 3 verbunden sein, wobei auch eine Steckverbindung oder eine Kombination hiervon vorgesehen sein kann, so dass die Spannelemente 6 z. B. im Rahmen einer Wartung austauschbar sind. Die beiden Schenkel 8 der Y-förmigen Spannelemente 6 formen jeweils konkave Spannflächen 9 für die Aufnahme eines Rotors 10. Zwei Spannelemente 6 können diametral in der Ringanordnung 3 vorliegen. Es kann jedoch auch bevorzugt sein, dass drei Spannelemente 6 gleichmäßig beabstandet, zum Beispiel in einem Winkel von 120° zueinander in der Ringanordnung 3 angeordnet sind. Zwischen den, die Spannflächen 9 formenden Schenkel 8 benachbarter Spannelemente 6 liegt vorteilhafterweise ein Freiraum vor, wobei je nach Ausgestaltung der Spannelemente 6 der Freiraum kleiner oder größer ausfallen kann. Die Spannelemente 6 können aus einem Metall oder einem faserverstärkten Kunststoff hergestellt sein und zur Gewichtseinsparung einen Hohlraum oder mehrere Hohlräume aufweisen. Ferner kann es vorteilhaft sein, wenn die Spannflächen 9 mit einer die Reibung zwischen Spannflächen 9 und Rotoroberfläche erhöhenden Schicht beschichtet sind, mit der die Übertragung des Drehmoments verbessert wird.

An weiteren, nicht mit Spannelementen 6 besetzten durch Verbindungsmittel 5 hergestellte Verbindungsstellen der Ringe 2 sind Gewichte 11, beispielsweise in Gestalt von Metallteilen vorgesehen, die beispielsweise an den Verbindungsmittel 4 reversibel befestigbar sind. Die Gewichte 11 sind insbesondere an dem Außenumfang der Ringanordnung angeordnet, indem die Gewichte 11 beispielsweise eine Senkbohrung aufweisen, durch die die Verbindungsmittel 4 in die Bohrungen der Ringe 2 geführt werden. Es können unterschiedliche Gewichte 11 eingesetzt werden, die je nach Spannaufnahme austauschbar sind. Eine Befestigung der Gewichte 11 am Innenumfang der Ringanordnung 3 ist ebenfalls möglich.

Das Bauteil 1 kann Mittel aufweisen, mit denen es und der hierin aufgenommene Rotor 10 an einer Antriebswelle befestigt werden. Auch kann es vorgesehen sein, dass das Bauteil 1 in ein weiteres Bauteil eingesetzt wird, welches wiederum mit einer Antriebswelle verbindbar ist.

Bei rotierendem Rotor 10 entwickeln die Spannelemente 6, Verbindungsmittel 4 sowie die Gewichte 11 Fliehkräfte. Die Verbindungsmittel 4 mit den Gewichten 11 weisen vorteilhafterweise ein höheres Gewicht auf als die Verbindungsmittel 4 mit den Spannelementen 6 und fungieren als Fliehkraftsegmente - sie erzeugen etwas größere Fliehkräfte als die Verbindungsmittel 4 mit den Spannelementen 6. Da die Ringe 2, insbesondere die Ringanordnung 3 bei Zugbelastung näherungsweise starr ist, werden die Spannelemente 6 nach innen gezogen, wenn sich die als Fliehkraftsegmente wirkende Gewichte 11 nach außen bewegen. Hierdurch kommt es auch bei hohen Drehzahlen und entsprechend starken Fliehkräften nicht zum Lösen der Rotorspannung. Im Gegenteil: Je schneller sich das erfindungsgemäße Bauteil 1 dreht und je höher die Fliehkräfte sind, desto stärker werden die Gewichte 11 nach außen und die Spannelemente 6 nach innen gezogen. Sofern die Massen der mehreren Verbindungsmittel 4 gleich sind, bestimmt im Wesentlichen das Verhältnis der Massen und Schwerpunkte der Spannelemente 6 zu den Massen und Schwerpunkte der Gewichte 11 wie sehr sich die Spannkraft mit steigender Drehzahl erhöht.

Um einen Rotor 10 bzw. einen Wellenzapfen eines Rotors 10 aufzunehmen, werden die Gewichte 11 mit einer Kraft von außen nach innen gedrückt. Dies bewirkt, dass sich die Spannelemente 6 nach außen bewegen. Das Entspannen kann manuell oder mit einer Hilfsvorrichtung geschehen. Hierbei kann es sich beispielsweise um einen Zylinder handeln, der auf zum Beispiel ein Gewicht 11 drückt, wogegen die beiden anderen Gewichte 11 des Bauteils 1 in zwei feststehenden Anschlägen fixiert sind. Gleichwohl können auch drei synchronisierte Zylinder benutzt werden, die gleichzeitig auf die Gewichte 11 drücken. Da die Ringe 2 bzw. Ringanordnung 3 in ihren/ihre Längsrichtungen steif sind/ist, bewegen sich die Spannelemente 6 nach außen, wenn sich die Gewichte 11 nach innen bewegen. Ohne die Einwirkung einer Kraft auf die Gewichte 11 erzeugen die Ringe 2 eine Vorspannkraft, welche die Spannelemente 6 auf die Oberfläche des Rotors 10, bzw. des Wellenzapfens drücken, so dass dieser zentriert ist und Momente reibschlüssig übertragen werden.

Das erfindungsgemäße Bauteil 1 kann beispielsweise dafür verwendet werden, Rotoren zu spannen und lösbar an einer Welle, insbesondere einer Schleuderwelle eines Schleuderprüfstands zu befestigen. Jedoch kann das Bauteil 1 auch für andere Spannaufgaben genutzt werden, bei denen ein Rotor oder ein rotierendes Werkstück gespannt werden muss. Hierfür kann das Bauteil 1 beispielsweise in eine drehend arbeitende Maschine eingesetzt und dort gehaltert werden. Gerade durch die Variabilität der Anzahl der Ringe 2 kann das Bauteil 1 einfach an die Spannaufgabe angepasst werden. Außerdem ist die Wartung, Montage und Demontage des Bauteils 1 einfach durchführbar.

Die Teile des Bauteils 1 können aus unterschiedlichen Materialien bestehen und in einfacher Weise miteinander verbindbar sein, was wiederum die Montage und die Wartung erheblich vereinfacht. Außerdem können die Teile des Bauteils 1 mit unterschiedlichen physikalischen Eigenschaften ausgestattet werden. So kann es beispielsweise vorteilhaft sein, wenn die Ringe 2 und die Spannelemente 6 aus einem Faserverbundwerkstoff hergestellt sind, die Verbindungsmittel 4 dagegen aus einem Metall bestehen.

Wesentliche Vorteile des erfindungsgemäßen Bauteils 1 sind, dass höhere Drehzahlen möglich sind, eine höhere Belastbarkeit die Spannmöglichkeiten verbessert und mehr Flexibilität beim Auslegen der Spannelemente 6 möglich sind. Ferner sind höhere Spannkräfte erreichbar und höhere Taktzeiten können erzielt werden. Außerdem hat sich gezeigt, dass durch die Gestaltung der Gewichte 11 sowie die variable Anzahl der Ringe 2 an unterschiedliche Motoren bzw. Rotorgeometrien, sowie Anwendungen angepasste Spannkräfte realisierbar sind.

## Patentansprüche

1. Bauteil (1) zur Aufnahme und zum Spannen eines Rotors (10) mit einer einen Hohlraum umschließenden Ringanordnung (3), umfassend mehrere ineinanderliegende Ringe (2), wobei an der Ringanordnung (3) zumindest zwei in den Hohlraum ragende Spannelemente (6) angebracht sind, die mit Spannflächen (9) eine Aufnahme für den Rotor (10) formen und wobei an der Ringanordnung (3) Gewichte (11) zur Fliehkraftkompensation vorliegen,
**gekennzeichnet dadurch, dass**
das Bauteil (1) sich radial durch die Ringanordnung (3) erstreckende Verbindungsmittel (4), durch die die Ringe (2) drehfest miteinander verbunden sind, aufweist.

2. Bauteil (1) nach Anspruch 1, **dadurch gekennzeichnet, dass** die Spannelemente (6) Y-förmig gestaltet sind und mit ihren beiden Schenkeln (8) die Spannflächen (9) für den aufzunehmenden Rotor (10) formen.

3. Bauteil (1) nach Anspruch 1 oder 2, **dadurch gekennzeichnet, dass** die Spannelemente (6) an den Verbindungsmitteln (4) angebracht sind.

4. Bauteil (1) nach einem der vorhergehenden Ansprüche, **dadurch gekennzeichnet, dass** in der Ringanordnung (3) zwei diametral angeordnete Spannelemente (6) vorliegen.

5. Bauteil (1) nach einem der vorhergehenden Ansprüche 1 bis 3, **dadurch gekennzeichnet, dass** in der Ringanordnung (3) drei gleichmäßig zueinander beabstandete Spannelemente (6) vorliegen.

6. Bauteil (1) nach Anspruch 2, **dadurch gekennzeichnet, dass** die Schenkel (8) der Spannelemente (6) eine konkav geformte Spannfläche (9) bilden.

7. Bauteil (1) nach einem der vorhergehenden Ansprüche, **dadurch gekennzeichnet, dass** die Spannflächen (9) mit einer die Reibung zwischen den Spannflächen (9) und der Rotoroberfläche erhöhenden Schicht beschichtet sind.

8. Bauteil (1) nach einem der vorhergehenden Ansprüche, **dadurch gekennzeichnet, dass** die Ringe (2) koaxial zueinander liegende Bohrungen zum Durchführen der radial verlaufenden Verbindungsmittel (4) aufweisen.

9. Bauteil (1) nach einem der vorhergehenden Ansprüche, **dadurch gekennzeichnet, dass** an weiteren, nicht mit den Spannelementen (6) verbundenen Verbindungsmitteln (4) Gewichte (11) zur Fliehkraftkompensation vorliegen.

10. Bauteil (1) nach Anspruch 9, **dadurch gekennzeichnet, dass** die Gewichte (11) an einem Ende der Verbindungsmittel (4) nahe dem äußeren Umfang der Ringanordnung (3) vorliegen.

11. Bauteil (1) nach einem der vorhergehenden Ansprüche, **dadurch gekennzeichnet, dass** zwischen den Ringen (2) Abstandsmittel (5) vorliegen.

## Claims

1. Component (1) for receiving and clamping a rotor (10), with a ring assembly (3) enclosing a hollow space and comprising several rings (2) arranged one inside the other, wherein at least two clamping elements (6) projecting into the hollow space are attached to the ring assembly (3), which, with clamping surfaces (9), form a receptacle for the rotor (10), and wherein weights (11) for centrifugal force compensation are present on the ring assembly (3), **characterized in that** the component (1) has connecting means (4) extending radially through the ring assembly (3), through which the rings (2) are connected to one another in a rotationally fixed manner.

2. Component (1) according to claim 1, **characterized in that** the clamping elements (6) are Y-shaped and, with their two legs (8), form the clamping surfaces (9) for the rotor (10) to be received.

3. Component (1) according to claim 1 or 2, **characterized in that** the clamping elements (6) are attached to the connecting means (4).

4. Component (1) according to one of the preceding claims, **characterized in that** two diametrically arranged clamping elements (6) are present in the ring assembly (3).

5. Component (1) according to one of the preceding claims 1 to 3, **characterized in that** three clamping elements (6) equally spaced apart from one another are present in the ring assembly (3).

6. Component (1) according to claim 2, **characterized in that** the legs (8) of the clamping elements (6) form a concavely shaped clamping surface (9).

7. Component (1) according to one of the preceding claims, **characterized in that** the clamping surfaces (9) are coated with a layer that increases the friction between the clamping surfaces (9) and the rotor surface.

8. Component (1) according to one of the preceding claims, **characterized in that** the rings (2) have bores arranged coaxially with one another for passing the radially extending connecting means (4) therethrough.

9. Component (1) according to one of the preceding claims, **characterized in that** weights (11) for centrifugal force compensation are present on further connecting means (4) that are not connected to the clamping elements (6).

10. Component (1) according to claim 9, **characterized in that** the weights (11) are present at one end of the connecting means (4) near the outer circumference of the ring assembly (3).

11. Component (1) according to one of the preceding claims, **characterized in that** spacer means (5) are present between the rings (2).

## Revendications

1. Pièce (1) destinée à la réception et au serrage d'un rotor (10) au moyen d'un ensemble annulaire (3) entourant une cavité, comprenant plusieurs anneaux (2) emboîtés les uns dans les autres, au moins deux éléments de serrage (6) qui saillent dans la cavité étant fixés à l'ensemble annulaire (3) et formant, au moyen de surfaces de serrage (9), un logement pour le rotor (10), et des poids (11) destinés à compenser la force centrifuge étant prévus sur l'ensemble annulaire (3), **caractérisée en ce que** la pièce (1) comporte des moyens de liaison (4) s'étendant radialement à travers l'ensemble annulaire (3) et au moyen desquels les anneaux (2) sont reliés entre eux de manière à être solidaires en rotation.

2. Pièce (1) selon la revendication 1, **caractérisée en ce que** les éléments de serrage (6) présentent une forme en Y et forment, avec leurs deux branches (8), les surfaces de serrage (9) destinées à recevoir le rotor (10).

3. Pièce (1) selon la revendication 1 ou 2, **caractérisée en ce que** lesdits éléments de serrage (6) sont fixés aux moyens de liaison (4).

4. Pièce (1) selon l'une des revendications précédentes, **caractérisée en ce que** deux éléments de serrage (6) disposés diamétralement l'un par rapport à l'autre sont prévus dans l'ensemble annulaire (3).

5. Pièce (1) selon l'une des revendications précédentes 1 à 3, **caractérisée en ce que** trois éléments de serrage (6) espacés uniformément les uns par rapport aux autres sont prévus dans l'ensemble annulaire (3).

6. Pièce (1) selon la revendication 2, **caractérisée en ce que** les branches (8) des éléments de serrage (6) forment une surface de serrage (9) de forme concave.

7. Pièce (1) selon l'une des revendications précédentes, **caractérisée en ce que** les surfaces de serrage (9) sont revêtues d'une couche augmentant la friction entre les surfaces de serrage (9) et la surface du rotor.

8. Pièce (1) selon l'une des revendications précédentes, **caractérisée en ce que** les anneaux (2) comportent des alésages disposés de façon coaxiale les uns par rapport aux autres pour le passage des moyens de liaison (4) s'étendant radialement.

9. Pièce (1) selon l'une des revendications précédentes, **caractérisée en ce que** des poids (11) destinés à compenser la force centrifuge sont prévus sur d'autres moyens de liaison (4) qui ne sont pas reliés aux éléments de serrage (6).

10. Pièce (1) selon la revendication 9, **caractérisée en ce que** les poids (11) sont prévus à une extrémité des moyens de liaison (4), à proximité de la périphérie extérieure de l'ensemble annulaire (3).

11. Pièce (1) selon l'une des revendications précédentes, **caractérisée en ce que** des moyens d'écartement (5) sont prévus entre les anneaux (2).
